# EUROPÄISCHE PATENTSCHRIFT

(11) **EP 0 676 849 B1**
(45) Veröffentlichungstag und Bekanntmachung des Hinweises auf die Patenterteilung: **24.07.1996**
(21) Anmeldenummer: 94105474.4
(22) Anmeldetag: 08.04.1994
(51) Int. Cl.: H02K 5/14, H02K 13/00, H02K 15/00

(54) **Verfahren zur Herstellung eines Kommutatormotors**
Process of manufacturing a commutator motor
Procédé de fabrication d'un moteur à collecteur

(43) Veröffentlichungstag der Anmeldung: 11.10.1995
(73) Patentinhaber: SIEMENS AKTIENGESELLSCHAFT, 80333 München (DE)
(72) Erfinder: Adam, Peter, Dipl.-Ing., D-97204 Höchberg (DE); Zeisner, Pius, Dipl.-Ing., D-97450 Arnstein (DE)

(56) Entgegenhaltungen:
- DE-A- 3 533 307
- US-A- 4 617 486
- PATENT ABSTRACTS OF JAPAN vol. 17, no. 261 (E-1369) 21. Mai 1993 & JP-A-05 003 646 (MITSUBA ELECTRIC MFG. CO. LTD.) 8. Januar 1993

## Beschreibung

Die Erfindung bezieht sich auf ein Verfahren zur Herstellung eines Kommutatormotors gemaß Anspruch 1.

Verfahren bzw. Vorrichtungen zum Einbau einer Bürstenhalterung mit darin vormagaziniertem Rückhalteteil zur Fixierung der Bürsten in einer radial angehobenen Montagestellung sind durch die DE-A1-B31092 VIII b/21d¹ und die EP-B1-0 236 254 bzw. deren prioritätsbegründenden US-PS'n 4 694 214 und 4 774 754 bekannt.

Im Fall der vorgenannten deutschen Patentanmeldung ist eine die Bürsten in einer Vormontagestellung radial anhebende Rückhaltescheibe axial geführt derart in der Bürstenhalterung vormagaziniert gehalten, daß sie beim Zusammenbau des Kommutatormotors, insbesondere beim Einführen des Rotors in das vormontierte Statorteil, durch den stirnseitig andrückenden Kommutator axial verschoben wird und dadurch die Bürsten freigibt.

Im Fall der EP-B1-0 236 254 ist eine Rückhaltescheibe mittels radialer Stege an die Bürstenhalterung vormagaziniert derart angespritzt, daß bei der Montage des Rotors in das Statorgehäuse durch axiales Andrücken des Kommutators an die Rückhaltescheibe die Stege wegbrechen und die Rückhaltescheibe axial verschoben wird bzw. als Trümmerteil in das Motorgehäuse fällt und derart die Bürsten in ihre Betriebsendstellung freigegeben werden.

In beiden vorgenannten Fällen ist zur Freigabe der Bürsten eine axiale Bewegung des vormontierten Rotors relativ zu den Bürsten derart notwendig, daß sie nach dem Freigeben aus ihrer Montagehalterung und ihrer ersten Kontaktnahme mit der Kommutatoroberfläche noch axial weiterbewegt werden müssen; dadurch besteht die Gefahr einer Beschädigung der Schleifflächen der Bürsten, die einen einwandfreien, insbesondere geräuscharmen Betrieb gefährden können. Da in beiden vorgenannten bekannten Fällen das Rückhalteteil innerhalb des Motors verbleibt, muß nach der Freigabe der Bürsten für eine gezielte Führung des Rückhalteteils in eine Endposition oder für eine sichere Ablage des bei der Freigabe der Bürsten in Trümmer zerbrochenen Rückhalteteils gesorgt werden.

Durch die JP-A-05 003 646 ist ein Verfahren zur Herstellung eines Kommutatormotors bekannt, bei dem zur Montage der Bürsten in ihrer Betriebsendposition ein Montagedorn auf das Kommutatorseitige Ende einer Rotorwelle bis zur freien Stirnseite des Kommutators aufgesteckt und dann die Rotorwelle mit dem Montagedorn soweit durch die Mittelöffnung einer Bürstenplatte mit daran gehaltenen Bürsten geführt wird, bis die Bürsten durch axiales Gleiten auf dem Montagedorn und dem Kommutator ihre Betriebsendposition erreicht haben.

Ein demgegenüber wesentlich einfacheres und betriebssichereres Verfahren zur Herstellung eines Kommutatormotors mit einer Bürstenhalterung mit einem vormagazinierten Rückhalteteil ist erfindungsgemaß durch die Lehre des Anspruchs 1 möglich; vorteilhafte Ausgestaltungen der Erfindung sind jeweils Gegenstand der Unteransprüche.

Durch die erfindungsgemäße Verwendung eines Montagedorns läßt sich einerseits die Entfernung des Rückhalteteils aus seiner Montagestellung in montagetechnisch günstiger und für einen sicheren Dauerbetrieb des Motors vorteilhafter Weise außerhalb des Motorgehäuses und andererseits ohne zusätzliche axiale Bewegung zwischen den nach der Entfernung des Rückhalteteils aus seiner Montagestellung auf der Kommutatoroberfläche aufliegenden Bürsten und dem Kommutator erreichen.

Die Entfernung des Rückhalteteils aus seiner Montagestellung mittels des äußeren Endteils des erfindungsgemaß vorgesehenen Montagedorns kann entweder außerhalb der eigentlichen Montagevorrichtung des Kommutatormotors oder bei bereits mit seinem anderen hülsenförmigen Ende auf dem Kommutator zentrierten Montagedorn erfolgen; im letzteren Fall kann nach einer ersten Ausgestaltung der Erfindung zur axialen Abstützung zwischen dem Montagedorn und dem Rotor der Montagedorn mit seinem motorseitigen Ende axial an dem Kommutator, insbesondere an dessen umgebogenen Kommutatorhaken, oder nach einer weiteren Ausgestaltung mit seinem anderen Ende axial, insbesondere innen, an der Rotorwelle anliegen.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1 bis 4: in jeweils axialem Längsschnitt vier aufeinanderfolgende Verfahrensschritte zur Einbringung einer Bürstenhalterung mit einem vormagazinierten Rückhalteteil in ihre Betriebsstellung relativ zum bereits mit eingestecktem Rotor vormontierten Statorgehäuse ;

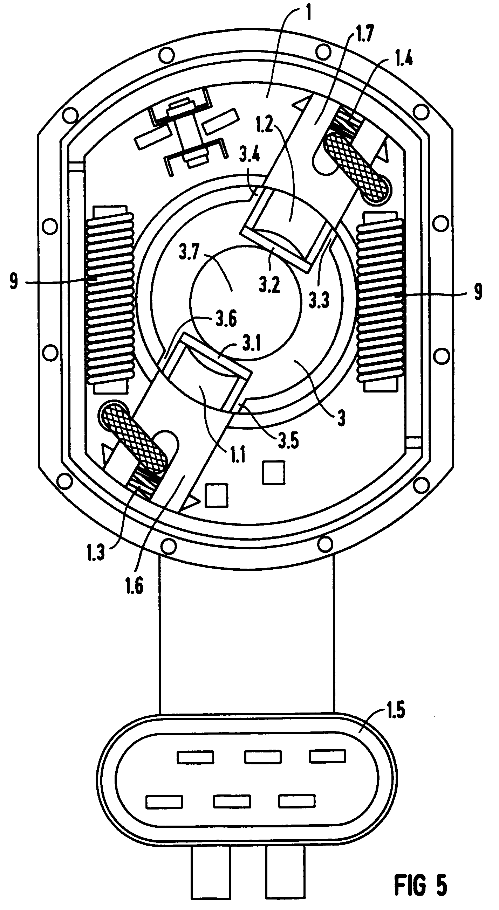

- FIG 5: eine stirnseitige Draufsicht auf die Bürstenhalterung mit vormagaziniertem Rückhalteteil.

In axialer Aufbaumontage ist in ein an seinem kommutatorseitigen Ende noch offenes Motorgehäuse 8 mit an seiner Innenumfangsseite gehaltenen Erreger-Magneten 8.1;8.2 ein Rotor mit einer Rotorwelle 5 mit darauf gehaltenem Rotorpaket 6 und Kommutator 4 sowie mit in die Rotorwicklung eingebrachter und mit den Haken der Lamellen des Kommutators 4 verbundener Rotor-Wicklung 7 axial bis in seine betriebsmäßige Endstellung eingesteckt.

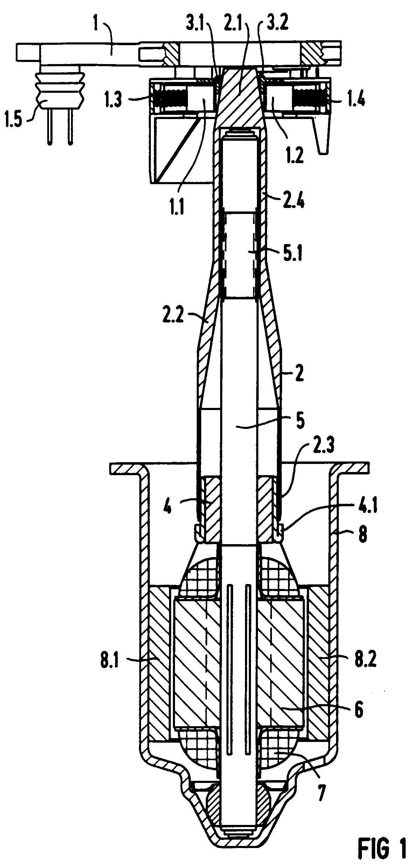

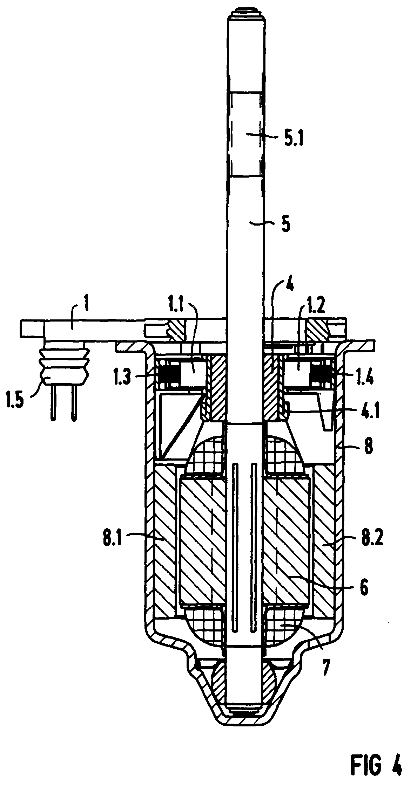

Eine Kunststoff-Bürstenhalterung 1 mit einem äußeren Anschlußstecker 1.5, mit Entstördrosseln 9;9 sowie insbesondere mit in Bürstenkästen geführten und durch Bürstenandruckfedern 1.3;1.4 nach radial innen gedrückten Bürsten 1.2;1.2 wird aus einer Montageausgangsstellung gemäß FIG 1 mit Hilfe des erfindungsgemäßen Montagedorns 2 in eine betriebsmäßige Endstellung gemäß FIG 4 gebracht.

Im vorliegenden Ausführungsbeispiel ist der Kommutator 4 als Antrieb eines Getriebemotors, insbesondere für Fensterheber- bzw. Schiebedachantriebe in Kraftfahrzeugen, vorgesehen; dazu wird an das offene Ende des topfförmigen Motorgehäuses 8 ein hier nicht dargestelltes Getriebegehäuse mit einem Schneckengetriebe angeflanscht, dessen Schneckenrad von einer Getriebewelle 5.1 angetrieben wird, die in den dargestellten Ausführungsbeispielen eine einstückige Verlängerung der Rotorwelle 5 bildet.

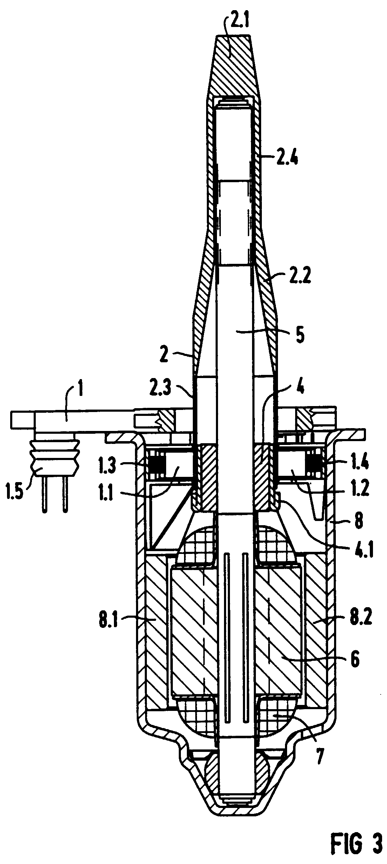

Der Montagedorn 2 ist nach einer Ausgestaltung der Erfindung hülsenförmig mit einer Innenbohrung derart versehen, daß einerseits zur axialen Abstützung das äußere Ende der Getriebewelle 5.1 gegen das geschlossene äußere Ende des Montagedorns innen anliegt und andererseits der Montagedorn 2 mit seinem motorseitigen Ende den Kommutator 4 außen so weit axial überdeckt, daß die axial über die Außenumfangsfläche des Montagedorns 2 verschobenen Bürsten 1.1;1.2 bei Erreichen ihrer axialen Endstellung gemäß FIG 3 nach einem axialen Wegziehen des Montagedorns 2 in Gegenrichtung nur noch eine radiale Bewegung ausführen müssen, um in ihre betriebsmäßige Kontaktierung zur Umfangsfläche des Kommutators 4 gemäß FIG 4 zu gelangen. Nach einer alternativen, insbesondere bei unterschiedlichen axialen Längen der Rotorwelle 5 bzw. der Getriebewelle 5.1 vorteilhaften Ausgestaltung der Erfindung liegt das äußere Ende der Getriebewelle 5.1 im Abstand zum Montagedorn 2, der zur axialen Abstützung dann am Kommutator 4, insbesondere an dessen Kommutatorhaken 4.1 abstützend anliegt.

Der scheibenförmige Rückhalteteil 3 weist axial vorstehende Auflagen 3.1;3.2 auf, auf denen die Bürsten 1.1;1.2 zunächst in einer radial angehobenen Montagestellung aufliegen.

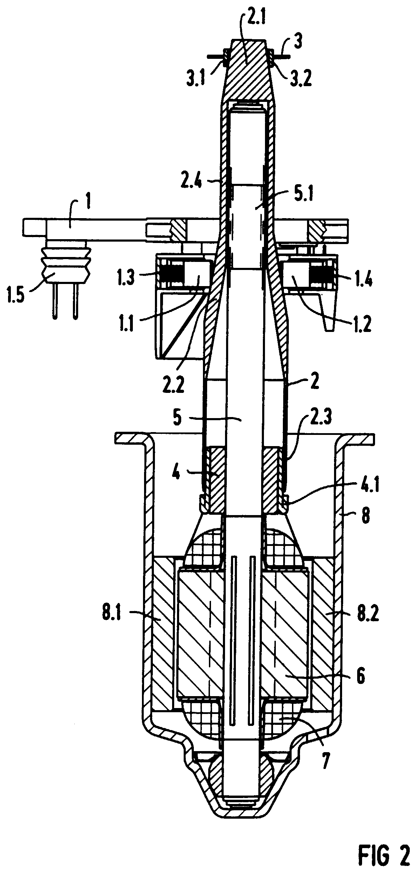

Der eine Endteil 2.1 des Montagedorns 2 ist in vorteilhafter Weise von seinem äußeren axialen Ende beginnend mit einer konischen Erweiterung versehen, derart daß der mit einer korrespondierenden zentralen Mittelöffnung 3.7 auf den einen Endteil 2.1 aufgesteckte, in der Bürstenhalterung 1 vormagaziniert gehaltene Rückhalteteil 3 beim axialen Weiterschieben der Bürstenhalterung 1 unter Trennung von der Bürstenhalterung 1 gemäß FIG 2 auf der konischen Erweiterung festgehalten wird.

Der in FIG 1-3 dargestellte, nach einer vorteilhaften Ausgestaltung der Erfindung hülsenförmig ausgebildete Montagedorn 2 weist neben dem ersten konisch erweiterten Endteil 2.1 zur Fixierung des Rückhalteteils 3 an seinem einen motorabgewandten Ende einen anschließenden, insbesondere innen im Paßsitz das überstehende Ende der Rotorwelle 5 bzw. der Getriebewelle 5.1 aufnehmenden, ersten zylindrischen Mittelteil 2.4, einen anschließenden zweiten konisch erweiterten Mittelteil 2.2 zur radialen Anhebung der auf seiner Umfangsfläche aufliegenden Bürsten 1.1;1.2 in ihre endgültige Montagestellung sowie schließlich einen zweiten zylindrischen, den Außenumfang des Kommutators 4, vorzugsweise im Paßsitz, übergreifenden Endteil 2.3 auf.

Aufgrund der erfindungsgemäßen Montage mit Hilfe eines Montagedorns 2 kann der Innendurchmesser der zentralen Mittelöffnung 3.1 des Rückhalteteils 3 kleiner gewählt werden als der Außendurchmesser einer über die Stirnseite des Kommutators 4 axial überstehenden, in den hülsenförmigen Montagedorn 2 reichenden Rotorwelle 5 bzw. Getriebewelle 5.1; außerdem kann in vorteilhafter Weise der radiale Abstand der die Bürsten 1.1;1.2 in ihrer Montagestellung zurückhaltenden Auflagen 3.1;3.2 des Rückhalteteils 3 kleiner als der Außendurchmesser des Kommutators 4 gewählt und dadurch eine sichere Rückhalterung auch bei besonders kompakter Bauweise bzw. eine längere Betriebsstandzeit der Bürsten durch Einsatz größerer Bürstenlängen bei ansonsten unveränderter Einbaugröße erreicht werden. Dies ist möglich, weil die Freigabe des Rückhalteteils 3 nicht durch den Kommutator 4 erfolgt, der dabei in eine zentrale Öffnung des Rückhalteteils 3 eintaucht, deren Innendurchmesser für diesen Fall mindestens dem Außendurchmesser des Kommutators 4 entsprechen müßte.

Die von den Auflagen 3.1;3.2 des Rückhalteteils 3 freigegebenen Bürsten 1.1;1.2 kommen zur Auflage auf die Außenumfangsfläche des Montagedorns 2 und werden zunächst über dessen zylindrischen Teil 2.4 weiterbewegt und dann gemäß FIG 2 im Bereich des zweiten konisch erweiterten Mittelteils 2.2 ein zweites Mal radial soweit angehoben, daß sie anschließend gemäß FIG 3 über den zweiten zylindrischen, den Außenumfang des Kommutators 4 übergreifenden Endteil 2.3 in ihre axiale Endstellung relativ zu den bereits in ihrer gegenseitigen axialen Endstellung befindlichen Bauteilen von Motorgehäuse 8 mit Erreger-Magneten 8.1,8.2 einerseits und Rotor mit Rotorwelle 5, Kommutator 4, Rotorpaket 6 und Rotorwicklung 7 andererseits gelangen können. Beim anschließenden axialen Abziehen des Montagedorns 2 bewegen sich dann die Bürsten 1.1;1.2 unter dem Druck der Bürstenandruckfedern 1.3;1.4 lediglich noch in radialer Richtung in ihre betriebsmäßige radiale Endlage, in der sie die Umfangsfläche des Kommutators 4 kontaktieren.

Das erfindungsgemäße Verfahren mittels eines Montagedorns 2 ist unabhängig von der Art der Vorfixierung des Rückhalteteils 3 innerhalb der Bürstenhalterung 1 vorteilhaft anzuwenden; der Rückhalteteil 3 kann entweder einstückig integriert, insbesondere über ausbrechbare Stege 3.3 bis 3.6, an eine Kunststoff-Bürstenhalterung 2 angespritzt oder als separates Teil im Schiebesitz in der Bürstenhalterung vormagaziniert angeordnet sein.

In zweckmäßiger Reihenfolge des Montagevorgangs sind folgende aufeinanderfolgende Verfahrensschritte vorgesehen:
Von seinem einen axialen, insbesondere getriebeseitigen, offenen Ende her wird in ein ansonsten vormontiertes Motorgehäuses 8 ein bewickelter Anker 4-7 mit einer Rotorwelle 5 und/oder Getriebewelle 5.1 und einem Kommutator 4 eingesteckt;
Der Montagedorn 2 wird mit seinem hülsenförmigen, zylindrischen anderen Endteil 2.3 auf den Kommutator 4 aufgesteckt, dabei reicht die über den Kommutator 4 axial vorstehende Rotorwelle 5 bzw. Getriebewelle 5.1 in das Innere des hülsenförmig ausgebildeten Montagedorns 2.

Die Bürstenhalterung 1 ist zuvor schon auf den konisch erweiterten Endteil 2.1 Montagedorn 2 aufgesteckt oder wird nunmehr auf dieses Endteil 2.1 aufgeschoben, dabei wird der Rückhalteteil 3 auf der konischen Erweiterung des ersten Endteils 2.1 verklemmt.

Die Bürstenhalterung 1 wird axial weiter in Richtung auf das kommutatorseitige Ende des Motors verschoben, dabei liegen die Bürsten 1.1;1.2 auf der Umfangsfläche des Montagedorns 2 auf.

Die Bürsten 1.1;1.2 werden im Bereich eines konisch erweiterten Mittelteils 2.2 bis auf einen radialen Abstand entsprechend dem Außenumfang des auf den Kommutator 4 aufgesteckten anderen, hülsenförmigen zylindrischen Endteils 2.3 des Montagedorns 2 radial angehoben.

Die Bürstenhalterung 1 wird mit den Bürsten 1.1;1.2 weiter entlang des Montagedorns 2 in ihre axiale Betriebsendstellung relativ zu dem Kommutator 4 verschoben.

Der Montagedorn 2 wird zurückgezogen, dabei bewegen sich die Bürsten 1.1;1.2 in nur radialer Richtung auf den Kommutator 4.

Das Motorgehäuse 8 wird im Bereich seiner kommutatorseitigen, offenen Seite komplettiert.

## Patentansprüche

1. Verfahren zur Herstellung eines Kommutatormotors mit einer statorseitigen Bürstenhalterung (1), in der Bürsten (1.1;1.2) geführt sind und in Kontaktandruck zu einem Kommutator (4) stehen, mit den Verfahrensschritten:
a) Die Bürsten (1.1;1.2) werden zunächst mittels eines Rückhalteteils (3) in einer radial angehobenen Montagestellung arretiert;
b) der Rückhalteteil (3) ist vormagaziniert in der Bürstenhalterung (1) gehalten;
c) die Bürstenhalterung (1) wird vor ihrer statorseitigen Montage auf das eine Endteil (2.1) eines Montagedorns (2) aufgesetzt, wobei durch axiales Verschieben des Rückhalteteils (3) die Bürsten (1.1;1.2) durch Auflage auf der Umfangsfläche des Montagedorns (2) in einer Montagestellung verbleiben;
d) der Montagedorn (2) wird mit seinem anderen, zumindest dem Außendurchmesser des Kommutators (4) entsprechenden Endteil (2.3) in eine den Kommutator (4) koaxial umgebende Lage gebracht, und anschließend wird die Bürstenhalterung (1) mit den Bürsten (1.1;1.2) durch weiteres axiales Verschieben entlang des Montagedorns (2) in ihre betriebsmäßige axiale Endlage relativ zu dem Kommutator (4) gebracht;
e) der Montagedorn (2) wird durch axiales Rückziehen entfernt, wobei die Bürsten (1.1;1.2) radial auf den Kommutator(4) gleiten.

2. Verfahren nach Anspruch 1 mit dem Merkmal:
f) Der Montagedorn (2) ist hülsenförmig ausgebildet und wird mit seinem anderen Endteil (2.3) , die Umfangsfläche des Kommutators (4) überdeckend, zur Verschiebung der Bürstenhalterung (1) mit den Bürsten (1.1;1.2) in ihre Betriebs-Endstellung auf den Kommutator (4) aufgesteckt.

3. Verfahren nach Anspruch 1 und/oder 2 mit dem Merkmal:
g) Der eine Endteil (2.1) des Montagedorns (2) ist mit einer konischen Erweiterung versehen, derart daß der mit einer zentralen Mittelöffnung (3.7) auf den einen Endteil (2.1) aufgesteckte Rückhalteteil (3) auf der konischen Erweiterung beim axialen Weiterschieben der Bürstenhalterung (1) unter Trennung von der Bürstenhalterung (1) festgehalten wird.

4. Verfahren nach Anspruch 3 mit dem Merkmal:
h) Der Innendurchmesser der zentralen Mittelöffnung (3.7) des Rückhalteteils (3) ist kleiner als der Außendurchmesser einer über die Außenstirnseite des Kommutators (4) axial überstehenden, in den hülsenförmigen Montagedorn (2) reichenden Rotorwelle (5) bzw. Getriebewelle (5.1).

5. Verfahren nach einem der Ansprüche 1-4 mit dem Merkmal:
i) Der Rückhalteteil (3) wird axial außerhalb des kompletten Kommutatormotors auf dem Montagedorn (2) fixiert.

6. Verfahren nach einem der Ansprüche 1-5 mit dem Merkmal:
j) Der Montagedorn (2) wird mit seinem anderen Endteil (2.3) am Kommutator (4) axial abgestützt.

7. Verfahren nach einem der Ansprüche 1-5 mit dem Merkmal:
k) Der Montagedorn (2) wird an seinem einen Endteil (2.1) an der, insbesondere in seinen Hülseninnenraum eingesteckten, Rotorwelle (5) bzw. Getriebewelle (5.1) abgestützt.

8. Verfahren nach einem der Ansprüche 1-7 mit dem Merkmal:
l) Der radiale Abstand von Auflagen (3.1;3.2) des Rückhalteteils (3) für die in einer Montagestellung angehobenen Bürsten (1.1;1.2)ist kleiner als der Außendurchmesser des Kommutators (4).

9. Verfahren nach einem der Ansprüche 1-8, insbesondere nach Anspruch 8, mit dem Merkmal:
m) Der, insbesondere hülsenförmig, ausgebildete Montagedorn (2) wird zur Fixierung des Halteteils (3) beim Aufschieben der Bürstenhalterung (1) ausgebildet, mit einem ersten konisch erweiterten Endteil (2.1) an seinem einen motorabgewandten Ende einem anschließenden, insbesondere innen im Paßsitz das überstehende Ende der Rotorwelle (5) bzw. der Getriebewelle (5.1) aufnehmenden, ersten zylindrischen Mittelteil (2.4), einem anschließenden zweiten konisch erweiterten Mittelteil (2.2) zur radialen Anhebung der Bürsten (1.1;1.2) in ihre endgültige Montagestellung sowie schließlich mit einem zweiten zylindrischen, den Außenumfang des Kommutators (4) übergreifenden Endteil (2.3).

10. Verfahren nach einem der Ansprüche 1-9 mit dem Merkmal:
n) Der Rückhalteteil (3) wird als seperates Teil im Schiebesitz in der Bürstenhalterung (1) vormagaziniert gehalten.

11. Verfahren nach einem der Ansprüche 1-9 mit dem Merkmal:
o) Der Rückhalteteil (3) wird einstückig integriert, insbesondere über ausbrechbare Stege (3.3-3.6) an eine Kunststoff-Bürstenhalterung, vorzugsweise in Form einer Kunststoff-Rückhaltescheibe, angespritzt, die mittels des Montagedorns (2) von der Bürstenhalterung (1) abgetrennt wird.

12. Verfahren nach einem der Ansprüche 1-11 mit folgenden aufeinanderfolgenden Verfahrensschritten:
p) Von seinem einen axialen, insbesondere getriebeseitigen, offenen Ende her wird in ein ansonsten vormontiertes Motorgehäuses (8) ein Anker (4-7) mit einer Rotorwelle (5) und/oder Getriebewelle (5.1) und einem Kommutator (4) eingesteckt;
q) Der Montagedorn (2) wird mit seinem hülsenförmigen, anderen Endteil (2.3) auf den Kommutator (4) aufgesteckt, dabei reicht die über den Kommutator (4) axial vorstehende Rotorwelle (5) bzw. Getriebewelle (5.1) in das Innere des hülsenförmig ausgebildeten Montagedorns (2);
r) die Bürstenhalterung (1) wird von dem anderen, insbesondere axial verschlossenen Endteil (2.1) des Montagedorns (2) auf den Montagedorn (2) aufgeschoben, dabei verklemmt der Rückhalteteil (3) auf der konischen Erweiterung des ersten Endteils (2.1) ;
s) die Bürstenhalterung (1) wird axial weiter in Richtung auf das kommutatorseitige Ende des Motors verschoben, dabei liegen die Bürsten (1.1;1.2) auf der Umfangsfläche des Montagedorns (2) auf;
t) die Bürsten (1.1;1.2) werden im Bereich eines konisch erweiterten Mittelteils bis auf einen radialen Abstand entsprechend dem Außenumfang des auf den Kommutator (4) aufgesteckten anderen Endteils (2.3) des Montagedorns (2) radial angehoben;
u) die Bürstenhalterung (1) wird mit den Bürsten (1.1;1.2) weiter entlang des Montagedorns (2) in ihre axiale Betriebsendstellung relativ zu dem Kommutator (4) verschoben;
v) der Montagedorn (2) wird zurückgezogen, dabei bewegen sich die Bürsten (1.1;1.2) in nur radialer Richtung auf den Kommutator (4);
W) das Motorgehäuse (8) wird im Bereich seiner kommutatorseitigen, offenen Seite komplettiert.

## Claims

1. Method for producing a commutator motor having a brush holder (1), on the stator side, in which brushes (1.1; 1.2) are guided and are pressed against a commutator (4) such that they make contact, having the following method steps:
a) the brushes (1.1; 1.2) are initially locked, by means of a restraining part (3), in a radially raised installed position;
b) the restraining part (3) is held in a preinstalled manner in the brush holder (1);
c) before being installed on the stator side, the brush holder (1) is placed onto one end part (2.1) of an installation mandrel (2), the brushes (1.1; 1.2) remaining in an installed position, by resting on the circumferential surface of the installation mandrel (2), as a result of axial displacement of the restraining part (3);
d) the installation mandrel (2) is moved such that its other end part (2.3), which corresponds at least to the external diameter of the commutator (4), is in a position coaxially surrounding the commutator (4), and subsequently the brush holder (1) with the brushes (1.1; 1.2) is moved, by further axial displacement along the installation mandrel (2), into its axial end position, in terms of operation, relative to the commutator (4);
e) the installation mandrel (2) is removed by axial withdrawal, the brushes (1.1; 1.2) sliding radially onto the commutator (4).

2. Method according to Claim 1, having the feature:
f) the installation mandrel (2) is constructed in the form of a sleeve and its other end part (2.3) is plugged onto the commutator (4), covering the circumferential surface of said commutator (4), in order to displace the brush holder (1), with the brushes (1.1; 1.2), into its final operating position.

3. Method according to Claim 1 and/or 2, having the feature:
g) one end part (2.1) of the installation mandrel (2) is provided with a conical expansion in such a manner that the restraining part (3), which is plugged onto the one end part (2.1) by means of a central opening (3.7), is fixed on the conical expansion while the brush holder (1) is being pushed further axially, being separated from the brush holder (1).

4. Method according to Claim 3, having the feature:
h) the internal diameter of the central opening (3.7) of the restraining part (3) is smaller than the external diameter of a rotor shaft (5) or drive shaft (5.1) which projects axially beyond the outer end of the commutator (4) and extends into the installation mandrel (2), which is in the form of a sleeve.

5. Method according to one of Claims 1-4, having the feature:
i) the restraining part (3) is fixed on the installation mandrel (2) axially outside the complete commutator motor.

6. Method according to one of Claims 1-5, having the feature:
j) the installation mandrel (2) is supported axially on the commutator (4) by means of its other end part (2.3).

7. Method according to one of Claims 1-5, having the feature:
k) the installation mandrel (2) is supported on its one end part (2.1), preferably being plugged into the interior of its sleeve, on the rotor shaft (5) or drive shaft (5.1).

8. Method according to one of Claims 1-7, having the feature:
l) the radial distance between the supports (3.1; 3.2) of the restraining part (3) for the brushes (1.1; 1.2), which are raised in an installed position, is less than the external diameter of the commutator (4).

9. Method according to one of Claims 1-8, preferably according to Claim 8, having the feature:
m) the installation mandrel (2), which is preferably constructed in the form of a sleeve, is constructed for fixing the restraining part (3) while the brush holder (1) is being pushed on, having a first conically expanded end part (2.1) on its end facing away from the motor, an adjacent, first cylindrical centre part (2.4), which holds the projecting end of the rotor shaft (5) or of the drive shaft (5.1) preferably internally in a press fit, an adjacent, second conically expanded centre part (2.2) for radially raising the brushes (1.1; 1.2) into their final installed position, and, finally, having a second cylindrical end part (2.3), which engages over the external circumference of the commutator (4).

10. Method according to one of Claims 1-9, having the feature:
n) the restraining part (3) is held in a preinstalled manner in the brush holder (1), as a separate part with a sliding fit.

11. Method according to one of Claims 1-9, having the feature:
o) the restraining part (3), is integrated in one piece, is injection-moulded, preferably via webs (3.3-3.6) which can be knocked out, on a plastic brush holder (1), preferably in the form of a plastic restraining disc, which is separated from the brush holder (1) by means of the installation mandrel (2).

12. Method according to one of Claims 1-11, having the following successive method steps:
p) from its one axial, open end, preferably on the drive side, an armature (4-7) having a rotor shaft (5) and/or drive shaft (5.1) and a commutator (4) is plugged into a motor housing (8) which is otherwise preinstalled;
q) the other end part (2.3), which is in the form of a sleeve, of the installation mandrel (2) is plugged onto the commutator (4), the rotor shaft (5) or drive shaft (5.1) which projects axially beyond the commutator (4) in this case extending into the interior of the installation mandrel (2), which is constructed in the form of a sleeve;
r) the brush holder (1) is pushed onto the installation mandrel (2) by the other end part (2.1) of the installation mandrel (2), which other end part (2.1) is preferably closed axially, the restraining part (3) in this case being clamped on the conical expansion of the first end part (2.1);
s) the brush holder (1) is pushed further axially in the direction of the commutator-side end of the motor, the brushes (1.1; 1.2) in this case resting on the circumferential surface of the installation mandrel (2);
t) the brushes (1.1; 1.2) are raised radially in the region of a conically expanded centre part until there is a radial separation corresponding to the external circumference of the other end part (2.3), which is plugged onto the commutator (4), of the installation mandrel (2);
u) the brush holder (1) is displaced, with the brushes (1.1; 1.2), further along the installation mandrel (2) into its axial final operating position relative to the commutator (4);
v) the installation mandrel (2) is withdrawn, the brushes (1.1; 1.2) in this case moving only in the radial direction onto the commutator (4);
w) the motor housing (8) is completed in the region of its open side, on the commutator side.

## Revendications

1. Procédé destiné à la fabrication d'un moteur à collecteur comportant, du côté du stator, un porte-balais (1), dans lequel sont guidés des balais (1.1 ; 1.2) qui sont pressés, en vue d'un contact vers un collecteur (4), comportant les étapes suivantes :
a) on bloque d'abord les balais (1.1 ; 1.2) dans une position de montage soulevée radialement au moyen d'un élément de retenue (3) ;
b) l'élément de retenue (3) est maintenu dans le porte-balais (1) par une insertion préliminaire ;
c) avant son montage du côté du stator, on place le porte-balais (1) sur l'un des éléments d'extrémité (2.1) d'un mandrin de montage (2), les balais (1.1 ; 1.2) restant par un coulissement axial de l'élément de retenue (3) dans une position de montage en prenant appui sur la surface périphérique du mandrin de montage (2) ;
d) on met le mandrin de montage (2), par son autre élément d'extrémité (2.3), qui correspond au moins au diamètre extérieur du collecteur (4), dans une position entourant coaxialement le collecteur (4), et on met, ensuite, le porte-balai (1) ayant les balais (1.1 ; 1.2) par un autre coulissement axial le long du mandrin de montage (2), dans sa position axiale finale de fonctionnement par rapport au collecteur (4) ;
e) On enlève le mandrin de montage (2) par un retrait axial, les balais (1.1 ; 1.2) glissant radialement sur le collecteur (4).

2. Procédé selon la revendication 1, présentant la particularité suivante :
f) le mandrin de montage (2) est réalisé en forme de douille et, pour déplacer le porte-balais (1) ayant les balais (1.1 ; 1.2) dans leur position finale de fonctionnement, on le monte, sur le collecteur (4) par son autre élément d'extrémité (2.3) qui recouvre la surface périphérique du collecteur (4).

3. Procédé selon la revendication 1 et/ou 2, présentant la particularité suivante :
g) l'un des éléments d'extrémité (2.1) du mandrin de montage (2) comporte un élargissement conique, de sorte qu'en continuant à déplacer axialement le porte-balais (1), l'élément de retenue (3) monté par une ouverture médiane centrale (3.7) sur l'un des éléments d'extrémité (2.1) est maintenu sur l'élargissement conique en étant séparé du porte-balais (1).

4. Procédé selon la revendication 3, présentant la particularité suivante :
h) le diamètre intérieur de l'ouverture médiane centrale (3.7) de l'élément de retenue (3) est inférieur au diamètre extérieur d'un arbre (5) de rotor ou d'un arbre (5.1) de transmission,qui dépasse axialement de la face frontale extérieure du collecteur (4) et qui s'etend dans le mandrin de montage (2) en forme de douille.

5. Procédé selon l'une quelconque des revendications 1 à 4, présentant la particularité suivante :
i) l'élément de retenue (3) est immobilisé axialement sur le mandrin de montage (2) à l'extérieur du moteur à collecteur complet.

6. Procédé selon l'une quelconque des revendications 1 à 5, présentant la particularité suivante :
j) on appuie axialement le mandrin de montage (2) sur le collecteur (4) par son autre élément d'extrémité (2.3).

7. Procédé selon l'une quelconque des revendications 1 à 5, présentant la particularité suivante :
k) on appuie axialement le mandrin de montage (2) par l'un de ses éléments d'extrémité (2.1) sur l'arbre (5) de rotor ou l'arbre (5.1) de transmission, lequel est notamment enfiché dans son espace intérieur de douille.

8. Procédé selon l'une quelconque des revendications 1 à 7, présentant la particularité suivante :
l) l'écartement radial d'appuis (3.1 ; 3.2) de l'élément de retenue (3) pour les balais (1.1 ; 1.2) soulevés dans une position de montage est inférieur au diamètre extérieur du collecteur (4) .

9. Procédé selon l'une quelconque des revendications 1 à 8, notamment selon la revendication 8, présentant la particularité suivante :
m) pour l'immobilisation de l'élément de retenue (3) lors de la mise en place du porte-balais (1), le mandrin de montage (2), qui est notamment réalisé en forme de douille, comporte un premier élément d'extrémité (2.1) à l'élargissement conique à l'une de ses extrémités éloignée du moteur, une première partie médiane cylindrique (2.4) qui s'y raccorde, à l'intérieur de laquelle est notamment ajustée avec précision l'extrémité dépassant de l'arbre (5) de rotor ou de l'arbre (5.1) de transmission, une deuxième partie médiane (2.2) à élargissement conique qui s'y raccorde destinée au soulèvement radial des balais (1.1 ; 1.2) dans leur position de montage définitive, et enfin un deuxième élément d'extrémité cylindrique (2.3) empiétant sur la périphérie extérieure du collecteur (4).

10. Procédé selon l'une quelconque des revendications 1 à 9, présentant la particularité suivante :
n) on maintient l'élément de retenue (3) par une insertion préliminaire en ajustement coulissant dans le porte-balais (1), sous la forme d'une pièce séparée.

11. Procédé selon l'une quelconque des revendications 1 à 9, présentant la particularité suivante :
o) on intègre l'élément de retenue (3) d'une seule pièce, on l'applique notamment par l'intermédiaire de barrettes (3.3 à 3.6) pouvant être enlevées par arrachement, par injection sur un porte-balais en matière plastique, de préférence sous la forme d'un disque de retenue en matière plastique, qui est séparé du porte-balais (1) au moyen du mandrin de montage (2).

12. Procédé selon l'une quelconque des revendications 1 à 11, comportant les étapes de procédé successives suivantes :
p) on enfiche une armature (4 à 7), comportant un arbre (5) de rotor et/ou un arbre (5.1) de transmission et un collecteur (4), dans un carter (8) de moteur monté au préalable, à partir d'une de ses extrémités axialement ouverte, notamment du côté transmission ;
q) on monte le mandrin de montage (2) sur le collecteur (4) par son autre élément d'extrémité (2.3) en forme de douille, ce faisant l'arbre (5) de rotor ou l'arbre (5.1) de transmission dépassant axialement du collecteur (4) s'étend à l'intérieur du mandrin de montage (2) réalisé en forme de douille ;
r) on fait coulisser le porte-balais (1) sur le mandrin de montage (2) par l'autre élément d'extrémité (2.1) du mandrin de montage (2), qui est notamment axialement fermé, ce faisant, l'élément de retenue (3) se coince sur l'élargissement conique du premier élément d'extrémité (2.1) ;
s) on continue de faire coulisser le porte-balais (1) axialement en direction de l'extrémité du moteur située du côté du collecteur, ce faisant, les balais (1.1 ; 1.2) prennent appui sur la surface périphérique du mandrin de montage (2) ;
t) on soulève radialement la zone d'une partie médiane à élargissement conique, les balais (1.1 ; 1.2) jusqu'à un écartement radial correspondant à la périphérie extérieure de l'autre élément d'extrémité (2.3) du mandrin de montage (2) monté sur le collecteur (4) ;
u) on continue à faire coulisser le porte-balais (1) ayant les balais (1.1 ; 1.2) le long du mandrin de ontage (2) dans sa position axiale de fonctionnement par rapport au collecteur (4);
v) on retire le mandrin de montage (2), ce faisant, les balais (1.1 ; 1.2) se déplacent uniquement en direction radiale vers le collecteur (4) ;
w) on complète le carter (8) de moteur dans la zone de son côté collecteur ouvert.
